# EUROPÄISCHE PATENTANMELDUNG

(11) **EP 4 275 953 A1**
(43) Veröffentlichungstag der Anmeldung: **15.11.2023**
(21) Anmeldenummer: 22172606.0
(22) Anmeldetag: 10.05.2022
(51) Int. Cl.: B60P 3/20, B62D 33/04, B60J 5/10, E05B 83/10

(54) **KÜHLKOFFERAUFBAU MIT VERRIEGELUNGSSTANGEN ZUR VERRIEGELUNG VON RÜCKWANDTÜREN**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Beschrieben und dargestellt ist ein Kühlkofferaufbau (1) eines Nutzfahrzeugs (N), insbesondere Lastkraftwagen, Anhänger oder Sattelauflieger, mit festen Seitenwänden (6), einem festen Dach (4) und einer Rückwand (25) umfassend einen Rückwandrahmen (8) mit zwei darin gehaltenen, festen Rückwandtüren (9), wobei die Seitenwände (6) jeweils ein Seitenwandpaneel (7), das Dach (4) ein Dachpaneel (5) und die Rückwandtüren (9) jeweils ein Türpaneel (10) umfassen, wobei die Seitenwandpaneele (7), das Dachpaneel (5) und die Türpaneele (10) eine strukturgebende, einem Laderaum (11) des Kühlkofferaufbaus (1) zugeordnete innere Decklage (19), eine strukturgebende, der Umgebung des Kühlkofferaufbaus (1) zugeordnete äußere Decklage (20) und eine zwischen der inneren Decklage (19) und der äußeren Decklage (20) angeordnete Kernlage (21) aus einem Kunststoff aufweisen, wobei die Rückwandtüren (9) jeweils wenigstens eine Verriegelungsstange (12) zum Verriegeln der Rückwandtür (9) in einer geschlossenen Stellung der Rückwandtür (9) aufweisen, wobei der Rückwandrahmen (8) einen oberen Querholm (13) und einen unteren Querholm (14) mit Aufnahmen (15) zum formschlüssigen Verriegeln der Verriegelungsstangen (12) aufweist. Damit der Laderaum vergrößert werden kann. Um die Aufbauten zu verbessern, ist vorgesehen, dass sich die Verriegelungsstangen (12) jeweils abschnittsweise zwischen der inneren Decklage (19) und der äußeren Decklage (20) eines Türpaneels erstrecken und dass die Verriegelungsstangen (12) jeweils eine Betätigungseinrichtung, insbesondere einen Handgriff (16), zum Verstellen der Verriegelungsstangen (12) von einer Verriegelungsstellung in eine Öffnungsstellung und zurück unter der Rückwandtüren (9) aufweisen.

## Beschreibung

Die Erfindung betrifft einen Kühlkofferaufbau eines Nutzfahrzeugs, insbesondere Lastkraftwagen, Anhänger oder Sattelauflieger, mit festen Seitenwänden, einem festen Dach und einer Rückwand umfassend einen Rückwandrahmen mit zwei darin gehaltenen, festen Rückwandtüren, wobei die Seitenwände jeweils ein Seitenwandpaneel, das Dach ein Dachpaneel und die Rückwandtüren jeweils ein Türpaneel umfassen, wobei die Seitenwandpaneele, das Dachpaneel und die Türpaneele eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus einem Kunststoff aufweisen, wobei die Rückwandtüren jeweils wenigstens eine Verriegelungsstange zum Verriegeln der Rückwandtür in einer geschlossenen Stellung der Rückwandtür aufweisen, wobei der Rückwandrahmen einen oberen Querholm und einen unteren Querholm mit Aufnahmen zum formschlüssigen Verriegeln der Verriegelungsstangen aufweist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Rückwandtüren die Rückwandtüren aufgenommen sind. Gegenüber von dem Rückwandrahmen ist eine Stirnwand vorgesehen. Bei Kofferaufbauten sind die Seitenwände, das Dach, die Stirnwand und die Rückwandtüren regelmäßig aus Seitenwandpaneelen, einem Dachpaneel, einem Stirnwandpaneel und Türpaneelen gebildet. Jedes dieser Paneele weist dabei bedarfsweise zwei strukturgebende Decklagen auf, zwischen denen eine Kernlage aus einem geschäumten oder einem extrudierten Kunststoff vorgesehen ist. Die entsprechenden Decklagen sind entweder der Umgebung des Kofferaufbaus oder dem Laderaum zugeordnet. Die Decklagen weisen also vereinfacht gesprochen nach innen oder nach außen. Jede Decklage kann dabei bedarfsweise mehrlagig ausgebildet sein und dient der Aussteifung der Paneele. Eine Decklage weist daher wenigstens eine Schicht aus einem Metall und/oder einem faserverstärkten Kunststoff auf.

Die Rückwandtüren können gegenüber dem Rückwandrahmen aus einer geschlossenen Stellung, in der die Rückwandtüren den Rückwandrahmen verschließen, in eine den Rückwandrahmen zum Be- und/oder Entladen des Kofferaufbaus durch den Rückwandrahmen freigebenden geöffneten Stellung verstellt werden. Hierzu sind die Rückwandtüren über Scharniere an seitlichen Vertikalholmen des Rückwandrahmens schwenkbar gehalten. Man bezeichnet die Rückwandtüren daher auch als Flügeltüren. An dem oberen Querholm und dem unteren Querholm des Rückwandrahmens sind Aufnahmen vorgesehen, in die an den Rückwandtüren festgelegte Verriegelungsstangen formschlüssig eingreifen können, um die Rückwandtüren in der geschlossenen Stellung zu verriegeln und so einen Zugang zum Laderaum für unbefugte Personen zu verhindern. Die Verriegelungsstangen oder die Rückwandtüren lassen sich zu diesem Zweck abschließen bzw. mit einem Schloss sichern. Die Verriegelungsstangen sind zur Sicherung der Rückwandtüren gegen ein unbefugtes Öffnen aus Stahl ausgebildet und an der Rückseite der Rückwandtüren, also außerhalb der Türpaneele, an den Rückwandtüren festgelegt.

Da die Kofferaufbauten geschlossen sind, werden Kofferaufbauten in besonderem Maße für den Transport von feuchtigkeitsempfindlichen Gütern, also den sogenannten Trockentransport, verwendet. Da die Kernlage aus einem geschäumten oder extrudierten Kunststoff eine hohe thermische Isolation bereitstellen kann, sind entsprechende, als Kühlkofferaufbauten bezeichnete Kofferaufbauten in ganz besonderem Maße für den Transport von temperaturempfindlichen Gütern, also beispielsweise für den sogenannten Kühltransport, vorgesehen.

Um den Laderaum der Kühlkofferaufbauten temperieren, insbesondere kühlen zu können, sind an den Stirnwänden sogenannte Transportkältemaschinen aufgehängt, die Kühlluft erzeugen und über einen Kanal in den Laderaum des Kühlkofferaufbaus hineinblasen. Parallel dazu saugen die Transportkältemaschinen Luft aus dem Laderaum an, um die Luft abzukühlen und diese erneut als Kühlluft in den Laderaum zu blasen.

Um eine hohe thermische Isolation bereitzustellen, können in den Paneelen des Kühlkofferaufbaus dickere Kernlagen aus geschäumtem oder extrudiertem Kunststoff vorgesehen werden. Da die äußeren Abmessungen, insbesondere die Länge und die Breite der Kühlkofferaufbauten bzw. der entsprechenden Nutzfahrzeuge genehmigungsrechtlich begrenzt sind, geht die Verwendung dickerer Paneele zulasten der Abmessungen des Laderaums. Es muss also in der Praxis ein Kompromiss aus guter thermischer Isolierung und einem großen Laderaum gefunden werden. Dazu werden regelmäßig nach den jeweiligen Anforderungen an den Kühlkofferaufbau unterschiedliche Paneeldicken zu dessen Herstellung verwendet. Kühlkofferaufbauten für den Tiefkühltransport weisen dickere Paneele mit einer dickeren Kernlage aus geschäumtem oder extrudiertem Kunststoff auf als Kühlkofferaufbauten für Kühltransporte bei nicht ganz so geringen Temperaturen. Die auf diese Weise zu erreichenden Kompromisse zwischen guter thermischer Isolation und großem Laderaum sind jedoch nicht immer zufriedenstellend.

Daher liegt der vorliegenden Erfindung die Aufgabe zugrunde, den Kühlkofferaufbau der eingangs genannten und zuvor näher erläuterten Art derart auszugestalten und weiterzubilden, dass der Laderaum vergrößert werden kann, ohne Nachteile bei der thermischen Isolation in Kauf nehmen zu müssen und/oder dass die thermische Isolation verbessert werden kann, ohne Nachteile bei der Größe des Laderaums in Kauf nehmen zu müssen.

Diese Aufgabe ist bei einem Kühlkofferaufbau nach dem Oberbegriff von Anspruch 1 dadurch gelöst, dass sich die Verriegelungsstangen jeweils abschnittsweise zwischen der inneren Decklage und der äußeren Decklage eines Türpaneels erstrecken und dass die Verriegelungsstangen jeweils eine Betätigungseinrichtung, insbesondere einen Handgriff, zum Verstellen der Verriegelungsstangen von einer Verriegelungsstellung in eine Öffnungsstellung und zurück unter der Rückwandtüren aufweisen.

Durch das Verlegen der Verriegelungsstangen teilweise in die Türpaneele der Rückwandtüren hinein, können die Rückwandtüren weiter nach hinten versetzt werden, ohne dass der Kühlkofferaufbau die genehmigungsrechtlich vorgegebene maximale Länge überschreitet. Die Rückwandtüren können dabei um die Fahrzeuglänge, die bislang für die Anordnung der Verriegelungsstangen hinter den Rückwandtüren benötigt wurde, nach hinten versetzt werden. Die Rückwandtüren können dann dicker ausgebildet werden und dennoch bedarfsweise einen längeren Laderaum bereitstellen.

Aus diesem Grunde ist es bei Planenaufbauten bereits üblich, die Verriegelungsstangen in die Rückwandtüren zu integrieren. Allerdings spielt bei den Planenaufbauten eine thermische Isolierung nicht nur keine Rolle, Planenaufbauten sind schlicht nicht thermisch isoliert. Planenaufbauten sind großflächig nur mit Planen verschlossen, die einerseits selbst keine relevanten wärmedämmenden Eigenschaften haben und andererseits auch einen Luftaustauch zwischen dem Laderaum und der Umgebung des Nutzfahrzeugs nicht ausschließen.

Die Verriegelungsstangen sind typischerweise aus Stahl oder einem anderen Metall gebildet. Die Verriegelungsstangen sind also sehr gute Wärmeleiter. Die Kernlagen in den Rückwandtüren der Kühlkofferaufbauten sind dagegen ganz bewusst aus einem Kunststoff gebildet, der Wärme möglichst schlecht leiten soll, um den Laderaum möglichst gut thermisch zu isolieren. Daher bietet es sich an, wenn die Kernlage wenigstens im Wesentlichen aus einem geschäumten und/oder extrudierten Kunststoff gebildet ist. Dem Zweck der thermischen Isolierung des Laderaums durch die Kernlage läuft es also gerade entgegen, Verriegelungsstangen in die Kernlage der Rückwandtüren einzubringen, und zwar insbesondere auch deshalb, weil die Verriegelungsstangen oben und unten über die Rückwandtüren überstehen. Die in der Kernlage vorgesehenen Verriegelungsstangen bilden daher sogenannte Kältebrücken, die Wärme aus der Umgebung des Nutzfahrzeugs über die Rückwandtüren in den Laderaum leiten und diesen mithin aufwärmen, was durch eine höhere Kälteleitung der Transportkältemaschine kompensiert werden muss. Der Energieverbrauch der Transportkältemaschine nimmt also zu, was aus Effizienzgründen in hohem Maße unerwünscht ist.

Vor diesem Hintergrund hat es der Fachmann bislang aus guten Gründen als kontraproduktiv angesehen, die Verriegelungsstangen von Kühlkofferaufbauten für den Kühltransport teilweise in die Rückwandtüren zu integrieren und dies mithin schon gar nicht in Erwägung gezogen. Die Erfindung hat jedoch erkannt, dass die thermischen Nachteile durch die teilweise Integration der Verriegelungsstangen in die Türpaneele der Rückwandtüren durch den dadurch einhergehenden Längengewinn für den Kühlkofferaufbau insgesamt wenigstens kompensiert werden können. Wird der durch die teilweise Integration der Verriegelungsstangen in die Rückwandtüren erzielte Längengewinn in Bezug auf den Kühlkofferaufbau genutzt, um die Kernlage entsprechend dicker auszugestalten, wird der Kühlkofferaufbau insgesamt nicht länger, kann aber dieselbe, wenn nicht sogar eine größere thermische Isolation des Laderaums bereitstellen. Ob hierbei eine bessere thermische Isolation erreicht werden kann und wie sehr die thermische Isolation verbessert werden kann, hängt auch von den Anforderungen an den Kühlkofferaufbau, insbesondere von der Temperatur ab, bei der Ladung mit dem Kühlkofferaufbau transportiert werden soll.

Bedarfsweise besteht mithin in einigen Anwendungsfällen keine Veranlassung, den Längengewinn durch das teilweise Integrieren der Verriegelungsstangen in die Kernlagen der Rückwandtüren vollständig für die Verwendung von dickeren Kernlagen aus, insbesondere geschäumtem und/oder extrudiertem, Kunststoff in den Türpaneelen zu nutzen. In solchen Fällen können die Rückwandtüren aber dennoch weiter nach hinten versetzt werden. Dadurch lässt sich dann ein Teil des Längengewinns durch die teilweise Integration der Verriegelungsstangen in die Kernlagen der Rückwandtüren zur Verlängerung des Laderaums nutzen, ohne dass dadurch die maximal zulässige Länge des Kühlkofferaufbaus bzw. des Nutzfahrzeugs überschritten würde.

Um ein besonders leichtes Handling der Verriegelungsstangen zu ermöglichen, weisen die Verriegelungsstangen jeweils eine Betätigungseinrichtung zum Verstellen der Verriegelungsstangen von der Verriegelungsstellung in die Öffnungsstellung und zurück auf. Dabei sind die Betätigungseinrichtungen der Verriegelungsstangen unter den Rückwandtüren vorgesehen, da dies platzsparend ist. Außerdem wird dadurch aber die thermische Isolierung des Kühlkofferaufbaus nicht beeinträchtigt. Der Einfachheit halber kann es sich bei den Betätigungseinrichtungen um Handgriffe handeln. Denkbar ist aber auch, dass die Betätigungseinrichtungen einen motorischen Antrieb umfassen, welcher so mit den Verriegelungsstangen gekoppelt ist, dass diese mittels des motorischen Antriebs verstellt werden können, ohne dass der Bediener dabei Hand anlegen muss. Der Bediener kann aber natürlich die motorischen Betätigungseinrichtungen bedarfsweise aktivieren, etwa indem er einen Taster, Schalter oder dergleichen betätigt oder indem er ein Funksignal oder dergleichen zur Aktivierung an die motorische Betätigungseinrichtung sendet. Motorisch angetriebene Betätigungseinrichtungen der Verriegelungsstangen können also insbesondere als Alternative für einen Handgriff zum Verstellen der Verriegelungsstangen eingesetzt werden. Denkbar ist aber auch, dass die Betätigungseinrichtungen zusätzlich zu einem Handgriff vorgesehen werden, so dass sich die Verriegelungsstangen je nach Bedarf über den Handgriff oder die motorische Betätigungseinrichtung verstellen lassen. Beispielsweise kann der Handgriff zum Verstellen der Verriegelungsstangen verwendet werden, wenn die motorische Betätigungseinrichtung nicht ordnungsgemäß funktionieren sollte.

Im Ergebnis wird also eine höhere Flexibilität bei der Kompromissfindung zwischen hoher thermischer Isolation und großem Laderaum ermöglicht. Diese erlaubt es dann je nach den Anforderungen an die unterschiedlichen Kühlkofferaufbauten, eine bessere Isolation und/oder eine größere Länge des Laderaums bereitzustellen.

Bei einer ersten besonders bevorzugten Ausgestaltung des Kühlkofferaufbaus sind in den geschlossenen Stellungen der Rückwandtüren die Verriegelungsstangen jeweils an Aufnahmen oberhalb und unterhalb der Rückwandtüren gehalten. Die Aufnahmen befinden sich am oberen Querholm und am unteren Querholm des Rückwandrahmens. Dort werden die Aufnahmen formschlüssig von den Verrieglungsstangen hintergriffen, wenn sich die Rückwandtüren in der geschlossenen Stellung und die Verriegelungsstangen in der Verriegelungsstellung befinden. Aus der Verriegelungsstellung können die Verriegelungsstangen in eine Öffnungsstellung verstellt werden, in der die Verriegelungsstangen die Aufnahmen am oberen Querholm und am unteren Querholm nicht formschlüssig hintergreifen, sondern das Öffnen der Rückwandtüren freigeben. Die Verriegelungsstangen können dann wieder in die Verriegelungsstellung zurückverstellt werden. Während des Verstellens der Verriegelungsstangen zwischen der Verriegelungsstellung und der Öffnungsstellung bleiben die Verriegelungsstangen verstellbar an den Rückwandtüren gehalten. So lassen sich die Rückwandtüren einfach verriegeln und wieder für das Öffnen der Rückwandtüren freigeben. Zudem kann auf diese Weise ein platzsparendes Verriegeln der Rückwandtüren sichergestellt werden.

Alternativ oder zusätzlich bietet es sich an, wenn die Verriegelungsstangen durch Drehen um eine Längsachse der Verriegelungsstangen von der Verriegelungsstellung in die Öffnungsstellung und zurück verstellbar an der Rückwandtür gehalten sind. Für das Verstellen der Verriegelungsstangen muss also kein nennenswerter zusätzlicher Bauraum in den Rückwandtüren geopfert werden. Zudem können die Verriegelungsstangen sehr einfach und zuverlässig über die wenigstens eine Betätigungseinrichtung, insbesondere in Form von Handgriffen, gedreht werden.

Zur Sicherstellung einer hinreichenden thermischen Isolierung des Laderaums des Kühlkofferaufbaus ist es zweckmäßig, wenn der Kühlkofferaufbau eine feste Stirnwand umfassend ein Stirnwandpaneel aufweist. Um eine hinreichende Kühlung des Laderaums des Kühlkofferaufbaus sicherzustellen, weist der Kühlkofferaufbau zudem vorzugsweise eine Transportkältemaschine zum Erzeugen von Kühlluft auf, die zweckmäßigerweise an der Stirnwand, insbesondere an der Außenseite der Stirnwand vorgesehen sein kann. Damit die Kühlluft der Transportkältemaschine zum Kühlen des Laderaums genutzt werden kann, ist es zweckmäßig, wenn die Transportkältemaschine zum Einblasen von Kühlluft in den Laderaum des Kühlkofferaufbaus über einen Kanal mit dem Laderaum verbunden ist.

Um einen unerwünschten Wärmeeintrag von außen in den Laderaum zu vermeiden, kann das Stirnwandpaneel vorzugsweise eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus einem, insbesondere geschäumten und/oder extrudierten, Kunststoff aufweisen. Die Kernlage aus dem, insbesondere geschäumten und/oder extrudierten, Kunststoff ist dabei, wie bei den anderen Paneelen des Kühlkofferaufbaus durch die innere Decklage und die äußere Decklage vor einer mechanischen Beschädigung sowie vor einem Eintreten von Feuchtigkeit geschützt. Dadurch kann die Kernlage aus, insbesondere geschäumtem und/oder extrudiertem, Kunststoff für eine sehr gute und zuverlässige thermische Isolierung des Kühlkofferaufbaus sorgen.

Um eine Beschädigung des, insbesondere geschäumten und/oder extrudierten, Kunststoffs in den Rückwandtüren etwa durch das Verstellen der Verriegelungsstangen von der Verriegelungsstellung in die Öffnungsstellung und zurück zu vermeiden, können die Verriegelungsstangen in den Rückwandtüren jeweils in einem sich wenigstens im Wesentlichen über die gesamte Höhe der zugehörigen Rückwandtür erstreckenden Führungsrohr drehbar aufgenommen sein. Auf diese Weise wird zudem eine gute thermische Entkopplung zwischen dem, insbesondere geschäumten und/oder extrudierten, Kunststoff der Kernlagen und den in den Kernlagen der Rückwandtüren teilweise aufgenommenen Verriegelungsstangen erreicht.

Der thermischen Entkopplung der Verriegelungsstangen von den Kernlagen in den Rückwandtüren ist es ferner zuträglich, wenn die Führungsrohre aus Kunststoff gebildet und/oder luftdicht gegenüber dem, insbesondere geschäumten und/oder extrudierten, Kunststoff in den Kernlagen der Rückwandtüren abgeschlossen sind. So wird die Wirkung der Verriegelungsstangen als Kältebrücken vermindert. Alternativ oder zusätzlich kann es jedoch bevorzugt sein, wenn die Verriegelungsstangen aus Metall, vorzugsweise aus Stahl, gebildet sind. Dann können die Verriegelungsstangen einen Zugriff auf den Laderaum durch unbefugte Personen zuverlässig vermeiden.

Um eine gute thermische Isolierung des Laderaums zu ermöglichen, können die Verriegelungsstangen und/oder die Führungsrohre alternativ oder zusätzlich in dem den äußeren Decklagen der Rückwandtüren zugewandten rückwärtigen Abschnitt der Rückwandtüren vorgesehen sein. Die Verriegelungsstangen sind dann in den wärmeren Teilen der Rückwandtüren vorgesehen. Die Verriegelungsstangen sind dann weniger geeignet, Wärme von Außen in Richtung des Laderaums zu leiten. Dies gilt in besonderem Maße, wenn der rückwärtige Abschnitt dünner als die Hälfte, vorzugsweise als ein Drittel, insbesondere als ein Viertel, der Dicke der Rückwandtür und/oder der Kernlage der Rückwandtür insgesamt ausgebildet ist.

Besonders zweckmäßig kann es aus den zuvor genannten Gründen sein, wenn die Verriegelungsstangen und/oder die Führungsrohre direkt mit den äußeren Decklagen der Rückwandtüren verbunden sind. Dann sind die Verriegelungsstangen möglichst weit außen bezogen auf die Rückwandtüren und damit weg vom Laderaum angeordnet. Die Verbindung der Verriegelungsstangen mit den äußeren Decklagen kann dabei bedarfsweise über die Führungsrohre erfolgen. Es ist jedoch bevorzugt, wenn in der direkten Verbindung der Verriegelungsstangen bzw. der Führungsrohre mit den äußeren Decklagen der Rückwandtüren kein, insbesondere geschäumter und/oder extrudierter, Kunststoff vorgesehen ist. Dabei bietet es sich für eine einfache Montage und eine geringe Wärmeleitung an, wenn die Führungsrohre mit den äußeren Decklagen der Rückwandtüren verklebt sind.

Eine hohe spezifische Isolierung des Laderaums durch die Rückwandtüren kann grundsätzlich erreicht werden, wenn das Verhältnis zwischen der Dicke der Kernlagen in den Rückwandtüren neben den Verriegelungsstangen und/oder Führungsrohren und dem Durchmesser der Verriegelungsstangen und/oder Führungsrohre wenigstens 0,15, vorzugsweise wenigstens 0,35, insbesondere wenigstens 0,4, oder höchstens 0,4, vorzugsweise höchstens 0,35, insbesondere höchstens 0,2, beträgt. Die Dicke der Kernlagen in den Rückwandtüren ist dann groß genug, um die Aufnahme der gut wärmeleitenden Verriegelungsstangen in den Kernlagen zu tolerieren. Alternativ oder zusätzlich kann die Dicke der Kernlagen in den Rückwandtüren neben den Verriegelungsstangen und/oder Führungsrohren wenigstens 70 mm, vorzugsweise wenigstens 80 mm, insbesondere wenigstens 100 mm, betragen. Auch dann kann die Dicke der Kernlagen in den Rückwandtüren groß genug sein, um die Aufnahme der gut wärmeleitenden Verriegelungsstangen in den Kernlagen zu tolerieren.

Grundsätzlich bietet es sich für eine gute thermische Isolation des Laderaums an, wenn die minimale Dicke der Rückwandtüren wenigstens 70 mm, vorzugsweise wenigstens 85 mm, insbesondere wenigstens 95 mm, beträgt. Hinsichtlich eines großen Laderaums bietet es sich ohne zu deutliche Einbußen bei der thermischen Isolation an, wenn die maximale Dicke der Rückwandtüren wenigstens 100 mm, vorzugsweise wenigstens 90 mm, insbesondere wenigstens 80 mm, beträgt.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Kühlkofferaufbau in einer perspektivischen Ansicht,
- Fig. 2: eine Draufsicht auf die Rückseite des Kühlkofferaufbaus aus Fig. 1 von hinten,
- Fig. 3: eine Schnittansicht des Rückwandrahmens des Kofferaufbaus aus Fig. 1 entlang der Schnittebene III-III aus Fig. 1 und
- Fig. 4: eine Schnittansicht des Rückwandrahmens des Kofferaufbaus aus Fig. 1 entlang der Schnittebene IV-IV aus Fig. 1.

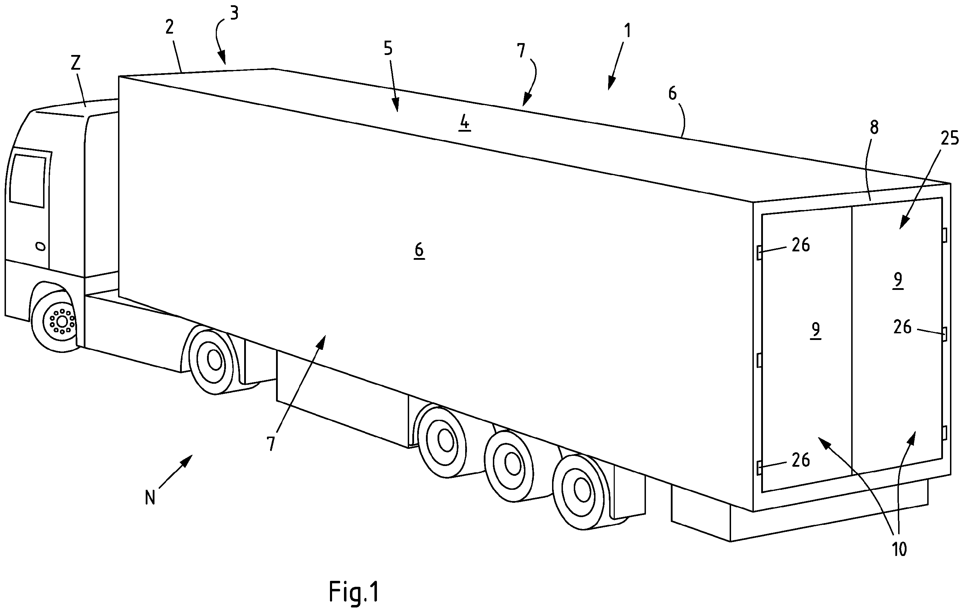

In der Fig. 1 ist ein von einem Nutzfahrzeug N in Form eines Sattelaufliegers getragener und von einer Zugmaschine Z gezogener Kühlkofferaufbau 1 dargestellt. Der Kühlkofferaufbau 1 umfasst eine Stirnwand 2 aus einem Stirnwandpaneel 3, ein Dach 4 aus einem Dachpaneel 5 und Seitenwände 6 aus jeweils einem Seitenwandpaneel 7. An der Rückseite des Kühlkofferaufbaus 1 ist eine Rückwand 25 mit einem Rückwandrahmen 8 vorgesehen, in dem zwei Rückwandtüren 9 über Scharniere 26 schwenkbar gehalten sind, die ebenfalls durch ein Türpaneel 10 gebildet werden. Die Rückwandtüren 9 können aus einer in dem Rückwandrahmen 8 vorgesehenen, einen Laderaum 11 des Kühlkofferaufbaus 1 verschließenden geschlossenen Stellung in eine den Laderaum 11 für das Be- und Entladen durch den Rückwandrahmen 8 freigebende geöffnete Stellung und zurück verstellt werden.

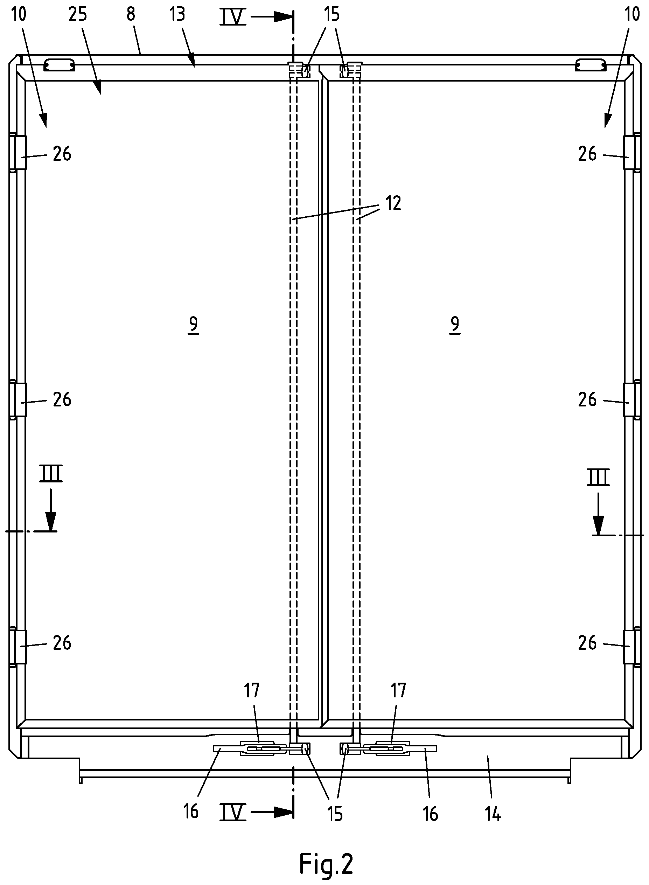

Wie insbesondere in der Fig. 2 dargestellt ist, weisen die Rückwandtüren 9 jeweils eine Verriegelungsstange 12 auf, mit der die entsprechende Rückwandtür 9 formschlüssig an dem Rückwandrahmen 8 gehalten werden kann. Die Rückwandtüren 9 können so in der geschlossenen Stellung verriegelt und gegenüber einem versehentlichen und/oder unbefugten Öffnen gesichert werden. Auch wenn in der Fig. 2 jeder Rückwandtür 9 eine einzige Verriegelungsstange 12 zugeordnet ist, könnten grundsätzlich auch mehrere Verriegelungsstangen 12 einer Rückwandtür 9 zugeordnet sein. Dies ist jedoch mit einem zusätzlichen konstruktiven Aufwand verbunden.

Zum Festlegen der Verriegelungsstangen 12 und damit auch der Rückwandtüren 9 selbst am Rückwandrahmen 8 in der geschlossenen Stellung ist jeder Verriegelungsstange 12 zugeordnet an dem oberen Querholm 13 und dem unteren Querholm 14 des Rückwandrahmens 8 eine Aufnahme 15 zum formschlüssigen Hintergreifen durch die jeweilige Verriegelungsstange 12 vorgesehen. In dem entsprechend formschlüssig in den Aufnahmen 15 gehaltenen Zustand der Verriegelungsstangen 12, können diese nicht mitsamt der Rückwandtür 9 in eine geöffnete Stellung verstellt werden. Hierzu müssen die Verriegelungsstangen 12 zunächst mit Hilfe von unterhalb der Rückwandtüren 9 vorgesehenen Betätigungseinrichtungen in Form von Handgriffen 16 um die Längsachse L der Verriegelungsstangen 12 gedreht werden. Um die Rückwandtüren 9 nach dem Schließen derselben wieder zu verriegeln, werden die Verriegelungsstangen 12 wieder in der Gegenrichtung gedreht, so dass die Verriegelungsstangen 12 wieder formschlüssig hinter die korrespondierenden Aufnahmen 15 an dem oberen Querholm 13 und dem unteren Querholm 14 gelangen. Die Betätigungseinrichtungen dienen also zum Verstellen der Verriegelungsstangen 12 zum Zwecke des Verriegelns der Rückwandtüren 9 und zum erneuten Öffnen der Rückwandtüren 9. Die Handgriffe 16 können nach dem Verriegeln der Rückwandtüren 9 an Griffhalterungen 17 unterhalb der Rückwandtüren 9 gehalten und/oder festgelegt werden.

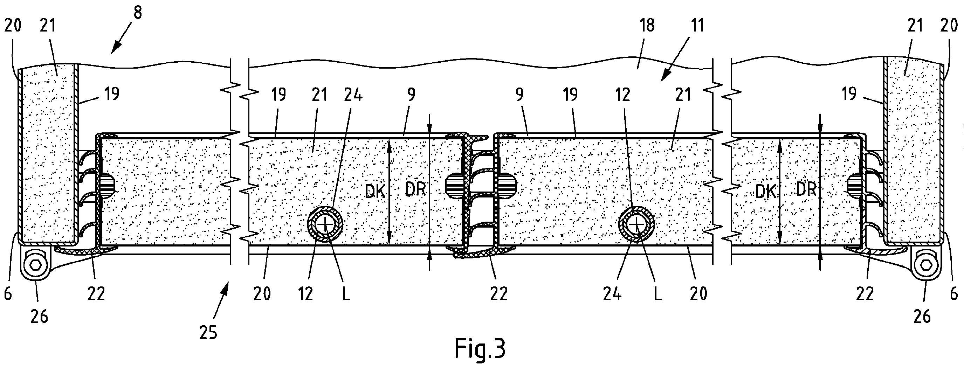

In der Fig. 3 ist ein Schnitt durch den Rückwandrahmen 8 bei geschlossenen Rückwandtüren 9 dargestellt, und zwar entlang einer Schnittebene, die wenigstens im Wesentlichen parallel zu einem Ladeboden 18 des Laderaums 11 des Kühlkofferaufbaus 1 ausgerichtet ist. Die Seitenwandpaneele 7 weisen jeweils innere strukturgebende Decklagen 19 und äußere strukturgebende Decklagen 20 auf, zwischen denen eine Kernlage 21 aus einem geschäumten Kunststoff vorgesehen ist. Auch die Rückwandtüren 9 weisen jeweils innere strukturgebende Decklagen 19 auf, die zum Laderaum 11 hinweisen. Die Rückwandtüren 9 weisen zudem äußere strukturgebende Decklagen 20 auf, die von dem Laderaum 11 wegweisen. Zwischen den inneren Decklagen 19 und den äußeren Decklagen 20, die jeweils mehrlagig ausgebildet sein und eine Schicht aus einem Metall oder einem faserverstärkten Kunststoff aufweisen können, ist eine Kernlage 21 aus einem geschäumten Kunststoff vorgesehen. Zwischen den Rückwandtüren 9 einerseits und zwischen den Seitenwänden 6 und den Rückwandtüren 9 andererseits sind Dichtungselemente 22 vorgesehen, die den Laderaum 11 gegenüber dem Eintritt von Luft von außerhalb des Kühlkofferaufbaus 1 abdichten.

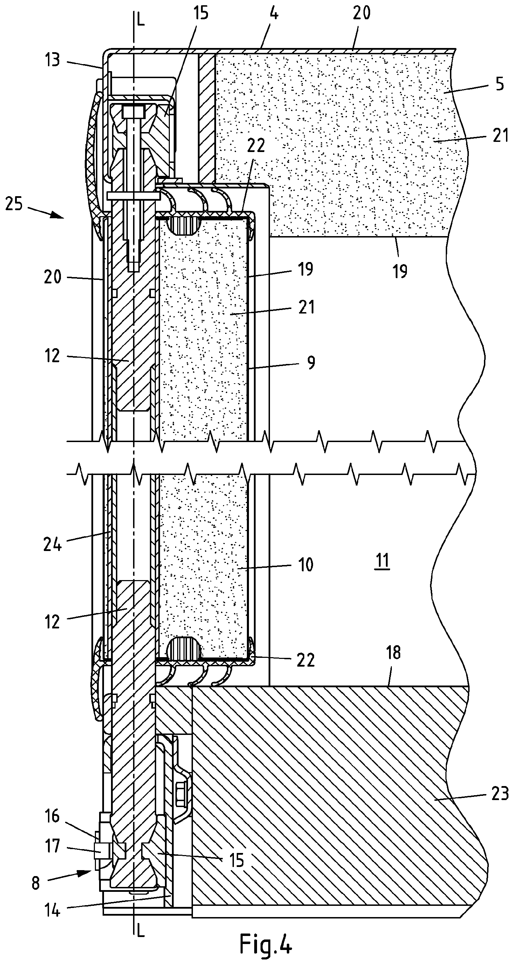

In der Fig. 4 ist ein Schnitt durch den Rückwandrahmen 8 entlang in einer sich in Längsrichtung des Kühlkofferaufbaus 1 erstreckenden Schnittebene dargestellt. Auch zwischen den Rückwandtüren 9 und dem oberen Querholm 13 des Rückwandrahmens 8 bzw. dem Dach 4 einerseits und dem unteren Querholm 14 des Rückwandrahmens 8 bzw. des Bodens 23 andererseits sind Dichtungselemente 22 zum Abdichten des Laderaums 11 vorgesehen. Ansonsten würde die gekühlte Luft des Laderaums 11 durch warme Luft der Umgebung ausgetauscht werden, so dass sich der Laderaum 11 erwärmen würde oder stärker gekühlt werden müsste. Die Verriegelungsstangen 12 erstrecken sich dabei zu einem Großteil in die Rückwandtüren 9. Das obere Ende und das untere Ende der Verriegelungsstangen 12 ragen jedoch über die Rückwandtüren 9 nach oben bzw. unten hinaus. Der nach oben gegenüber der Rückwandtür 9 hinausragende Teil der Verriegelungsstange 12 ist auf der Höhe des oberen Querholms 13 des Rückwandrahmens 8 formschlüssig in einer Aufnahme 15 gehalten. Der nach unten über die Rückwandtür 9 vorstehende Teil der Verriegelungsstange 12 ist auf der Höhe des unteren Querholms 14 des Rückwandrahmens 8 formschlüssig in einer weiteren Aufnahme 15 gehalten.

Wie in den Fig. 3 und 4 dargestellt ist, erstrecken sich angrenzend an die äußeren Decklagen 20 der Rückwandtüren 9 in den Kernlagen 21 der Rückwandtüren 9 die Verriegelungsstangen 12. Die Verriegelungsstangen 12 sind dabei von dem geschäumten Kunststoff der Kernlagen 21 durch Führungsrohre 24 getrennt. Während die Verriegelungsstangen 12 aus Metall gefertigt sind, sind die Führungsrohre 24 aus Kunststoff gebildet. Zwischen den Führungsrohren 24 und den Verriegelungsstangen 12 verbleibt jeweils ein geringer Luftspalt, so dass die Verriegelungsstangen 12 in den Führungsrohren 24 um die Längsachse L der Verriegelungsstangen 12 und der Führungsrohre 24 von der die Rückwandtüren 9 verriegelnden Verriegelungsstellung in die das Beladen des Laderaums 11 durch die Rückwandtüren 9 freigebende Öffnungsstellung und zurück verstellt werden können. Die Verriegelungsstangen 12 sind zudem über einen Großteil der Länge der Verriegelungsstangen 12 als Hohlprofil ausgebildet und lediglich mit Luft gefüllt.

Bei dem dargestellten und insoweit bevorzugten Kühlkofferaufbau 1 beträgt das Verhältnis der Dicke DK der Kernlagen 21 in den Rückwandtüren 9 neben den Führungsrohren 24 zum Durchmesser der Führungsrohre 24 etwa 30%. Dabei beträgt die Dicke DK der Kernlagen 21 in den Rückwandtüren 9 neben den Führungsrohren 24 etwa 85 mm. Die minimale Dicke DR der Rückwandtüren 9 beträgt ferner 90 mm, während die maximale Dicke DR der Rückwandtüren 9 etwa 100 mm beträgt.

### Bezugszeichenliste

- 1: Kühlkofferaufbau
- 2: Stirnwand
- 3: Stirnwandpaneel
- 4: Dach
- 5: Dachpaneel
- 6: Seitenwand
- 7: Seitenwandpaneel
- 8: Rückwandrahmen
- 9: Rückwandtür
- 10: Türpaneel
- 11: Laderaum
- 12: Verriegelungsstange
- 13: oberer Querholm
- 14: unterer Querholm
- 15: Aufnahme
- 16: Handgriff
- 17: Griffhalterungen
- 18: Ladeboden
- 19: innere Decklage
- 20: äußere Decklage
- 21: Kernlage
- 22: Dichtungselement
- 23: Boden
- 24: Führungsrohr
- 25: Rückwand
- 26: Scharniere
- DK: Dicke Kernlage
- DR: Dicke Rückwandtür
- L: Längsachse
- N: Nutzfahrzeug
- Z: Zugmaschine

## Patentansprüche

1. Kühlkofferaufbau (1) eines Nutzfahrzeugs (N), insbesondere Lastkraftwagen, Anhänger oder Sattelauflieger, mit festen Seitenwänden (6), einem festen Dach (4) und einer Rückwand (15) umfassend einen Rückwandrahmen (8) mit zwei darin gehaltenen, festen Rückwandtüren (9), wobei die Seitenwände (6) jeweils ein Seitenwandpaneel (7), das Dach (4) ein Dachpaneel (5) und die Rückwandtüren (9) jeweils ein Türpaneel (10) umfassen, wobei die Seitenwandpaneele (7), das Dachpaneel (5) und die Türpaneele (10) eine strukturgebende, einem Laderaum (11) des Kühlkofferaufbaus (1) zugeordnete innere Decklage (19), eine strukturgebende, der Umgebung des Kühlkofferaufbaus (1) zugeordnete äußere Decklage (20) und eine zwischen der inneren Decklage (19) und der äußeren Decklage (20) angeordnete Kernlage (21) aus einem Kunststoff aufweisen, wobei die Rückwandtüren (9) jeweils wenigstens eine Verriegelungsstange (12) zum Verriegeln der Rückwandtür (9) in einer geschlossenen Stellung der Rückwandtür (9) aufweisen, wobei der Rückwandrahmen (8) einen oberen Querholm (13) und einen unteren Querholm (14) mit Aufnahmen (15) zum formschlüssigen Verriegeln der Verriegelungsstangen (12) aufweist,
**dadurch gekennzeichnet, dass** sich die Verriegelungsstangen (12) jeweils abschnittsweise zwischen der inneren Decklage (19) und der äußeren Decklage (20) eines Türpaneels erstrecken und dass die Verriegelungsstangen (12) jeweils eine Betätigungseinrichtung, insbesondere einen Handgriff (16), zum Verstellen der Verriegelungsstangen (12) von einer Verriegelungsstellung in eine Öffnungsstellung und zurück unter der Rückwandtüren (9) aufweisen.

2. Kühlkofferaufbau nach Anspruch 1,
**dadurch gekennzeichnet, dass** in der geschlossenen Stellung der Rückwandtür (9) die Verriegelungsstangen (12) jeweils von einer die Aufnahmen (15) am oberen Querholm (13) und am unteren Querholm (14) formschlüssig hintergreifenden Verriegelungsstellung in eine die Aufnahmen (15) am oberen Querholm (13) und am unteren Querholm (14) nicht formschlüssig hintergreifenden Öffnungsstellung verstellbar an der Rückwand (25) gehalten sind.

3. Kühlkofferaufbau nach Anspruch 1 oder 2,
**dadurch gekennzeichnet, dass** die Verriegelungsstangen (12) durch Drehen um eine Längsachse (L) der Verriegelungsstangen (12) von der Verriegelungsstellung in die Öffnungsstellung und zurück verstellbar an der Rückwandtür (9) gehalten sind.

4. Kühlkofferaufbau nach einem der Ansprüche 1 bis 3,
**dadurch gekennzeichnet, dass** eine feste Stirnwand (2) umfassend ein Stirnwandpaneel (3) und/oder eine an einer Stirnwand (2) vorgesehene Transportkältemaschine zum Erzeugen von Kühlluft vorgesehen ist.

5. Kühlkofferaufbau nach Anspruch 4,
**dadurch gekennzeichnet, dass** das Stirnwandpaneel (3) eine strukturgebende, einem Laderaum (11) des Kühlkofferaufbaus (1) zugeordnete innere Decklage (19), eine strukturgebende, der Umgebung des Kühlkofferaufbaus (1) zugeordnete äußere Decklage (20) und eine zwischen der inneren Decklage (19) und der äußeren Decklage (20) angeordnete Kernlage (21) aus einem, insbesondere geschäumten und/oder extrudierten, Kunststoff aufweist.

6. Kühlkofferaufbau nach Anspruch 4 oder 5,
**dadurch gekennzeichnet, dass** die Transportkältemaschine zum Einblasen von Kühlluft in den Laderaum (11) des Kühlkofferaufbaus (1) über einen Kanal mit dem Laderaum (11) verbunden ist.

7. Kühlkofferaufbau nach einem der Ansprüche 1 bis 6,
**dadurch gekennzeichnet, dass** die Verriegelungsstangen (12) in den Rückwandtüren (9) jeweils in einem sich wenigstens im Wesentlichen über die gesamte Höhe der zugehörigen Rückwandtür (9) erstreckenden Führungsrohr (24) drehbar aufgenommen sind.

8. Kühlkofferaufbau nach Anspruch 7,
**dadurch gekennzeichnet, dass** die Führungsrohre (24) aus Kunststoff gebildet und/oder luftdicht gegenüber dem, insbesondere geschäumten und/oder extrudierten, Kunststoff in den Kernlagen (21) der Rückwandtüren (9) abgeschlossen sind und/oder dass die Verriegelungsstangen (12) aus Metall, vorzugsweise aus Stahl, gebildet sind.

9. Kühlkofferaufbau nach einem der Ansprüche 1 bis 8,
**dadurch gekennzeichnet, dass** die Verriegelungsstangen (12) und/oder die Führungsrohre (24) in dem den äußeren Decklagen (20) der Rückwandtüren (9) zugewandten rückwärtigen Abschnitt der Rückwandtüren (9) vorgesehen sind und dass, vorzugsweise, der rückwärtige Abschnitt dünner als die Hälfte, vorzugsweise als ein Drittel, insbesondere als ein Viertel, der Dicke der Rückwandtür (9) und/oder der Kernlage (21) ausgebildet ist.

10. Kühlkofferaufbau nach einem der Ansprüche 1 bis 9,
**dadurch gekennzeichnet, dass** die Verriegelungsstangen (12) und/oder die Führungsrohre (24) direkt, insbesondere ohne, insbesondere geschäumten und/oder extrudierten, Kunststoff der Kernlage (21), mit den äußeren Decklagen (20) der Rückwandtüren (9) verbunden sind und dass, vorzugsweise, die Verriegelungsstangen (12) und/oder die Führungsrohre (12) mit den äußeren Decklagen der Rückwandtüren (9) verklebt sind.

11. Kühlkofferaufbau nach einem der Ansprüche 1 bis 10,
**dadurch gekennzeichnet, dass** das Verhältnis zwischen der Dicke (DK) der Kernlagen (21) in den Rückwandtüren (9) neben den Verriegelungsstangen (12) und/oder Führungsrohren (24) und dem Durchmesser der Verriegelungsstangen (12) und/oder Führungsrohre (24) wenigstens 0,15, vorzugsweise wenigstens 0,35, insbesondere wenigstens 0,4, beträgt.

12. Kühlkofferaufbau nach einem der Ansprüche 1 bis 11,
**dadurch gekennzeichnet, dass** die Dicke (DK) der Kernlagen (21) in den Rückwandtüren (9) neben den Verriegelungsstangen (12) und/oder Führungsrohren (24) wenigstens 70 mm, vorzugsweise wenigstens 80 mm, insbesondere wenigstens 100 mm, beträgt.

13. Kühlkofferaufbau nach einem der Ansprüche 1 bis 12,
**dadurch gekennzeichnet, dass** die minimale Dicke (DR) der Rückwandtüren (9) wenigstens 80 mm, vorzugsweise wenigstens 90 mm, insbesondere wenigstens 100 mm, beträgt und/oder dass die maximale Dicke (DR) der Rückwandtüren (9) wenigstens 100 mm, vorzugsweise 90 mm, insbesondere 80 mm, beträgt.
